# EUROPEAN PATENT SPECIFICATION

(11) **EP 4 053 691 B1**
(45) Date of publication and mention of the grant of the patent: **05.11.2025**
(21) Application number: 20913511.0
(22) Date of filing: 31.12.2020
(51) Int. Cl.: G06F 3/04842, G06F 3/0485, G06F 3/0482, G06F 3/0488, G06F 3/04883

(54) **METHOD FOR OPERATING PAGE, APPARATUS, COMPUTER DEVICE AND COMPUTER-READABLE STORAGE MEDIUM**
VERFAHREN ZUM BETREIBEN EINER SEITE, VORRICHTUNG, COMPUTERVORRICHTUNG UND COMPUTERLESBARES SPEICHERMEDIUM
PROCÉDÉ DE FONCTIONNEMENT DE PAGE, APPAREIL, DISPOSITIF INFORMATIQUE ET SUPPORT DE STOCKAGE LISIBLE PAR ORDINATEUR

(30) Priority: 16.01.2020 CN 202010046858
(43) Date of publication of application: 07.09.2022
(73) Proprietor: Beijing Jingdong Zhenshi Information Technology Co., Ltd., Beijing 100086 (CN)
(72) Inventor: ZHU, Xun, Beijing 100086 (CN)
(74) Representative: Vossius & Partner Patentanwälte Rechtsanwälte mbB
(86) International application number: PCT/CN2020/142233
(87) International publication number: WO 2021/143542

(56) References cited:
- CN-A- 106 020 626
- CN-A- 106 933 466
- CN-A- 109 271 081
- CN-A- 111 290 691
- US-A1- 2012 113 036
- US-A1- 2014 059 428
- US-A1- 2014 313 650
- US-A1- 2016 196 041
- US-A1- 2020 012 419
- US-A1- 2023 088 628

## Description

### TECHNICAL FIELD

The present disclosure relates to a method for operating a page, an apparatus, a computer device, and a computer-readable storage medium.

### BACKGROUND

With the development of computer technology, more and more operations can be realized by mobile devices. For example, pages such as cards, videos, and tasks are configured with an operation area composed of a plurality of keys, which can realize "Share", "Like", "Comment", "Jump", "Return", "Confirm", "Set" and many other functions. However, due to the presence of many keys on the page, the displayed content is squeezed in the operation area, and the screen size of the mobile device is limited, thus users are prone to misoperate on the page.

It should be noted that the information disclosed in the background section above is only used to enhance the understanding of the background of the present disclosure, and therefore may include information that does not constitute the prior art known to those of ordinary skill in the art.
CN 109271081 A relates to a scrolling screenshot method and electronic device, where the electronic device may enable the user to take a scrolling screenshot by using a touch operation such as a swipe gesture on the preview image.

### SUMMARY

In view of this, the present disclosure provides a method for operating a page, an apparatus, a computer device, and a computer-readable storage medium. The invention is set out in the appended set of claims.
The invention is specified by the independent claims. Preferred embodiments are defined in the dependent claims. In the following description, although numerous features may be designated as optional, it is nevertheless acknowledged that all features comprised in the independent claims are not to be read as optional.

Other features and advantages of the present disclosure will become apparent from the following detailed description, or may be learned in part by practice of the present disclosure.

According to an aspect of the present disclosure, there is provided a method for operating a page, including: detecting an operation on a display object in a current page; where, in the current page, an operation area of the display object is hidden; when detecting that the operation is a continuous sliding operation, displaying the operation area for the display object; and when detecting that a sliding point of the continuous sliding operation reaches an area matching with any operation key in the operation area, performing an operation corresponding to a function of the operation key on the display object.

According to an embodiment of the present disclosure, the continuous sliding operation includes: a continuous sliding operation in which a continuous sliding distance of the display object exceeds a preset offset threshold.

According to an embodiment of the present disclosure, the method further includes: selecting the operation key and highlighting the operation key through the continuous sliding operation.

According to an embodiment of the present disclosure, when the selected operation key is an operation key for instructing to re-hide the operation area, the performing the operation corresponding to the function of the operation key on the display object includes: hiding the operation area and resetting the display object to an original position.

According to an embodiment of the present disclosure, the method further includes: detecting whether the display object is slid to an original position; and when the display object is slid to the original position, hiding the operation area.

According to another aspect of the present disclosure, there is provided an electronic apparatus, including: a touch screen, configured to detect an operation on a display object in a current page of the electronic apparatus; where, in the current page, an operation area of the display object is hidden; and a processor, configured to display the operation area for the display object in the current page when the touch screen detects that the operation is a continuous sliding operation; and when the touch screen detects that a sliding point of the continuous sliding operation reaches an area matching with any operation key in the operation area, perform an operation corresponding to a function of the operation key on the display object.

According to an embodiment of the present disclosure, the processor is further configured to select the operation key and highlight the operation key through the continuous sliding operation.

According to an embodiment of the present disclosure, the touch screen is further configured to detect whether the display object is slid to an original position, and the processor is further configured to hide the operation area when the touch screen detects that the display object is slid to the original position.

According to yet another aspect of the present disclosure, there is provided a computer device, including: a memory, a processor, and executable instructions stored in the memory and capable of running in the processor, and the processor implements any one of the above-mentioned methods for operating a page when executing the executable instructions.

According to yet another aspect of the present disclosure, there is provided a computer-readable storage medium on which computer-executable instructions are stored, and when the executable instructions are executed by a processor, any one of the above-mentioned methods for operating a page is implemented.

According to the method for operating a page provided by the present disclosure, the operation area of the object to be operated can be displayed only when an operation satisfying a condition is performed on the object to be operated, and the operation area can be hidden in other cases to avoid misoperation, which can effectively increase the area of the main display area of the page, enhance page integrity and content coherence, and make the user's vision more unified.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure. Obviously, the drawings in the following description are only some embodiments of the present disclosure, and for those of ordinary skill in the art, other drawings can also be obtained from these drawings without creative effort.
Fig. 1 is a flowchart of a method for operating a page according to an exemplary embodiment.
Fig. 2 is a flowchart of another method for operating a page according to an exemplary embodiment.
Fig. 3 is a schematic structural diagram of an electronic apparatus according to an exemplary embodiment.
Fig. 4 is a schematic structural diagram of a computer device according to an exemplary embodiment.
Fig. 5 is a schematic diagram of operating a page of a mobile phone according to an exemplary embodiment.
Fig. 6 is a schematic diagram illustrating another operation of a page of a mobile phone according to an exemplary embodiment.
Fig. 7 is a schematic diagram illustrating still another operation of a page of a mobile phone according to an exemplary embodiment.

### DETAILED DESCRIPTION

The exemplary embodiments will now be described more fully with reference to the accompanying drawings. However, the exemplary embodiments can be implemented in various forms and should not be construed as limited to the examples set forth herein; rather, these embodiments are provided so that the present disclosure will be more comprehensive and complete, and the concepts of the exemplary embodiments will be fully conveyed to those skilled in the art. The drawings are merely schematic illustrations of the present disclosure and are not necessarily drawn to scale. The same reference numerals in the drawings represent the same or similar parts, and thus repeated descriptions thereof will be omitted.

Furthermore, the described features, structures, or characteristics may be combined in any suitable manner in one or more embodiments. In the following description, numerous specific details are provided in order to give a thorough understanding of the embodiments of the present disclosure. However, those skilled in the art will appreciate that the technical solutions of the present disclosure may be practiced without one or more of the specific details, or other methods, apparatuses, steps, etc. may be employed. In other instances, well-known structures, methods, apparatuses, implementations, or operations are shown or described in detail to avoid obscuring the aspects of the present disclosure.

In addition, the terms "first" and "second" are only used for descriptive purposes, and should not be construed as indicating or implying relative importance or implying the number of the indicated technical features. Thus, the feature defined as "first" or "second" may expressly or implicitly include one or more of that feature. In the description of the present disclosure, "a plurality of" means at least two, such as two, three, etc., unless otherwise expressly and specifically defined.

As mentioned above, in order to solve the problems of page crowding and high probability of misoperation, the present disclosure proposes a new method for operating a page. Hereinafter, various embodiments of the present disclosure will be specifically described.

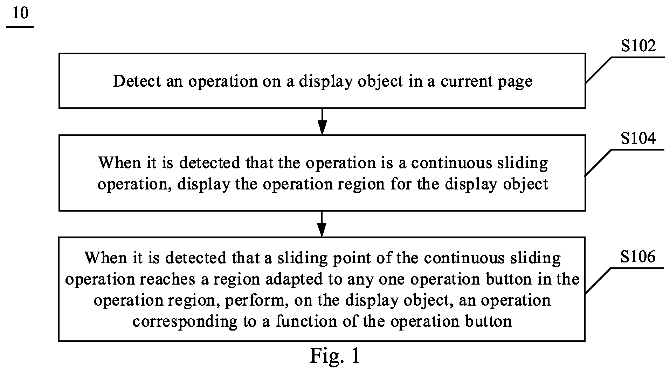

Fig. 1 is a flowchart of a method for operating a page according to an exemplary embodiment. The method for operating a page as shown in Fig. 1 may be applied to mobile devices such as smart phones and tablet computers, for example.

Referring to Fig. 1, a method 10 for operating a page includes the following steps.

In step S102, an operation on a display object in a current page is detected.

In the current page, an operation area of the display object is hidden.

The display objects on the page of the mobile device include: cards, tasks, videos, music, etc.

In step S104, when it is detected that the operation is a continuous sliding operation, the operation area is displayed for the display object.

In some embodiments, the continuous sliding operation may include a continuous sliding operation in which a continuous sliding distance of the display object exceeds a preset offset threshold.

In step S106, when it is detected that a sliding point of the continuous sliding operation reaches an area matching with any operation key in the operation area, an operation corresponding to the function of the operation key is performed on the display object.

As mentioned above, when various operations (such as "Share", "Comment", "Jump") on the display object on the page by the user are performed through the corresponding keys, displaying the operation area for the display object includes: displaying at least one operation key for the display object.

According to the method for operating a page provided by the embodiment of the present disclosure, the operation area of the object to be operated can be displayed only when the operation meeting the condition is performed on the object to be operated, and the operation area can be hidden in other cases to avoid misoperation, which can effectively increase the area of the main display area of the page, enhance page integrity and content coherence, and make the user's vision more unified.

It should be clearly understood that the present disclosure describes how to form and use specific examples, but the principles of the present disclosure are not limited to any details of these examples. Rather, these principles can be applied to many other implementations based on the teachings of the present disclosure.

Based on the above, before performing the operation corresponding to the function of the operation key on the display object in step S106, the method 10 may further include: through the continuous sliding operation on the display object, selecting the operation key and highlighting the operation key.

According to the method for operating a page provided by some embodiments of the present disclosure, the key is activated by sliding a finger, which can enhance the coherence, flexibility and user experience of operating the page.

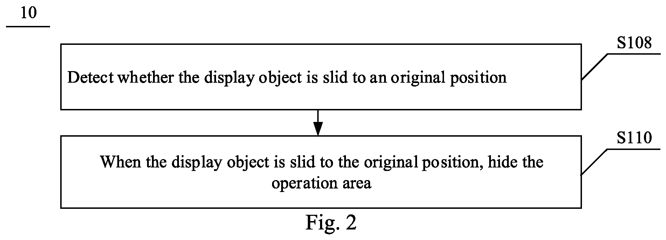

In some embodiments, as shown in Fig. 2, after displaying at least one operation key for the display object in step S104, the method 10 may further include the following steps.

In step S108, it is detected whether the display object is slid to an original position.

In step S110, when the display object is slid to the original position, the operation area is hidden.

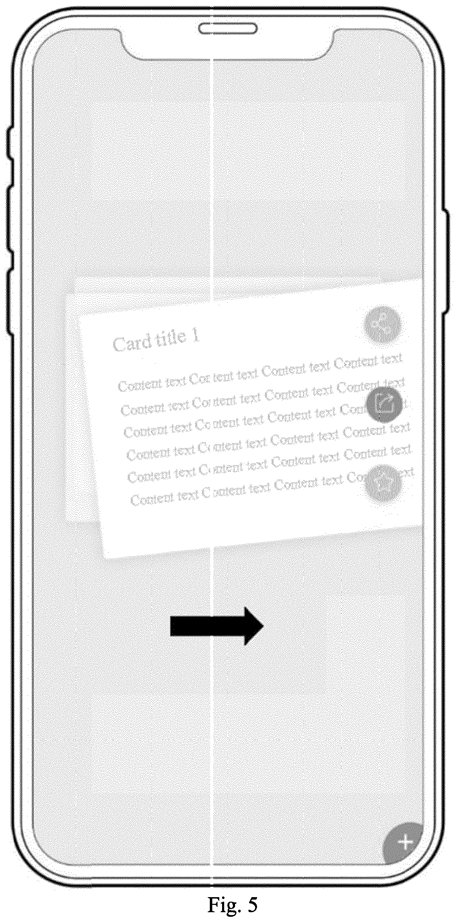

Taking the display object "Card" as an example, the user may slide (drag) the card along four directions of up, down, left and right on the screen of the mobile phone. For example, referring to Fig. 5, the user slides the card to the right of the screen, and the client detects a sliding distance of the card to the right. When it is detected that the sliding distance reaches a preset offset threshold, three operation keys as shown in the figure are displayed for the card, and the operation key in the middle is selected to be highlighted. At this time, if the user's finger leaves the screen, the key selection is completed, and accordingly the "Forward" operation will be performed on the card; and if the user's finger does not leave the screen, but then slides the card to the original position, the client detects the sliding recovery event, and then the three operation keys are hidden again and the page is rendered.

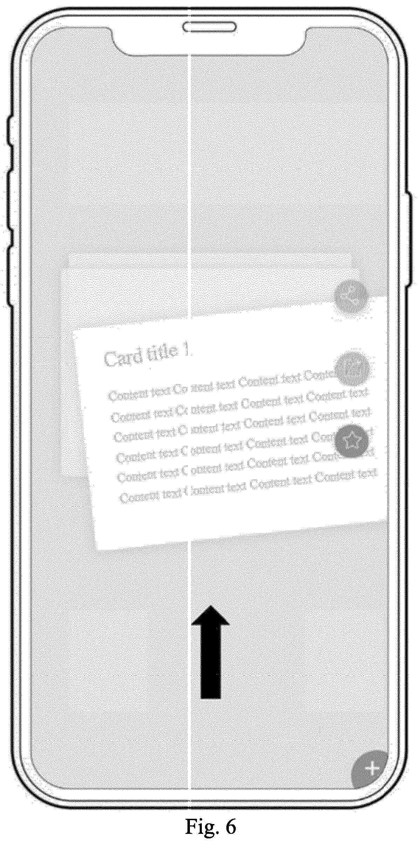

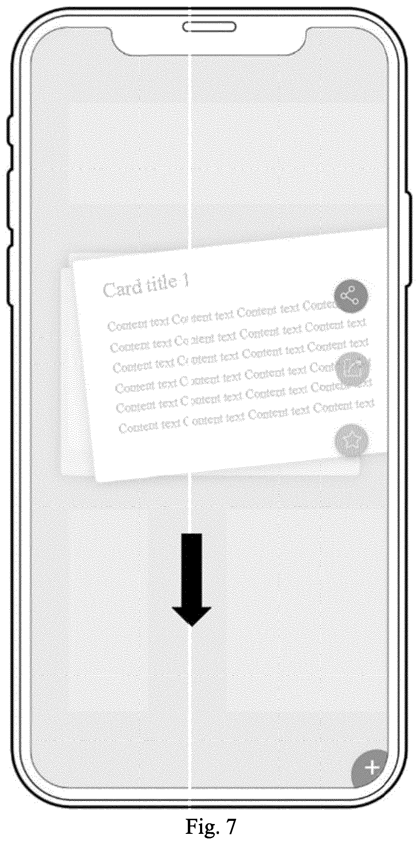

Similarly, as shown in Fig. 6, the user slides the card to an upper side of the screen, and when the client detects that the sliding distance reaches the preset offset threshold, it displays three operation keys as shown in the figure for the card, and selects the top operation key to be highlighted. At this time, if the user's finger leaves the screen, the key selection is completed, and accordingly, the "Share" operation will be performed on the card accordingly. As shown in Fig. 7, the user slides the card to the lower side of the screen, and when the client detects that the sliding distance reaches the preset offset threshold, the three operation keys as shown in the figure are displayed for the card, and the operation key at the bottom is selected to be highlighted. At this time, if the user's finger leaves the screen, the key selection is completed, and the "Collect" operation will be performed on the card accordingly.

It should be noted that the present disclosure is not limited to the above-mentioned directions of sliding operation and operation keys, and the client may configure any number of sliding directions to correspond to any number of operation keys one-to-one.

Based on the above, in some embodiments, if the selected operation key is an operation key for instructing to re-hide the operation area, S106 may further include: hiding the operation area and resetting the display object to the original position. That is, corresponding to S108 to S110, the method of the present disclosure provides another way of re-hiding the operation area of the display object. The reset of the display object does not need to be completed by maintaining the sliding operation by the user, but the client can automatically realize it when the user selects a specific key to hide all the keys.

It should be noted that, in the present disclosure, the operation on the display object may be performed by a user's gesture operation in addition to the sliding operation on the display object. That is, the operation for displaying the operation area may be either a contact manipulation of the display object by the user, or a non-contact manipulation of the display object. Correspondingly, in some embodiments, the method 10 may further include: determining whether the detected gesture of the user is a preset gesture for displaying the operation area of the display object; and when the detected gesture of the user is the preset gesture, the client displaying the operation area for the display object.

Those skilled in the art can understand that all or part of the steps for implementing the above-described embodiments are implemented as computer programs executed by the CPU. When the computer programs are executed by the CPU, the above-mentioned functions defined by the above-mentioned methods provided by the present disclosure are performed. The programs can be stored in a computer-readable storage medium, which may be a read-only memory, a magnetic disk, an optical disk, or the like.

In addition, it should be noted that the above-mentioned drawings are only schematic illustrations of the processes included in the methods according to the exemplary embodiments of the present disclosure, and are not intended to limiting the present disclosure. It is easy to understand that the processes shown in the above figures do not indicate or limit the chronological order of these processes. In addition, it is also readily understood that these processes may be performed synchronously or asynchronously, for example, in a plurality of modules.

The following are the apparatus embodiments of the present disclosure, which can be used to execute the method embodiments of the present disclosure. For details not disclosed in the apparatus embodiments of the present disclosure, the method embodiments of the present disclosure may be referred to.

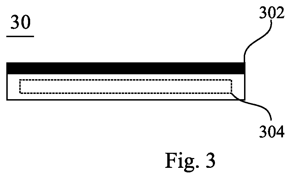

Fig. 3 is a schematic structural diagram of an electronic apparatus according to an exemplary embodiment. The electronic apparatus shown in Fig. 3 may be, for example, a side view of the smartphone shown in Figs. 5-7. Referring to Fig. 3, the electronic apparatus 30 includes a touch screen 302 and a processor 304. The touch screen 302 may be, for example, a vector pressure sensing technology touch screen, a resistive technology touch screen, a capacitive technology touch screen, an infrared technology touch screen, a surface acoustic wave technology touch screen, etc., and is used to detect the operation on the display object in the current page of the electronic apparatus 30.

In the current page, the operation area of the display object is hidden.

The processor 304 is configured to, when the touch screen 302 detects that the operation is a continuous sliding operation, display an operation area for the display object in the current page; and when the touch screen 302 detects that a sliding point of the continuous sliding operation reaches an area matching with any operation key in the operation area, perform the operation corresponding to the function of the operation key on the display object.

In some embodiments, before performing the operation corresponding to the function of the operation key on the display object, the processor 304 may be further configured to select the operation key and highlight the operation key through the continuous sliding operation on the display object.

In some embodiments, after the processor 304 displays the operation area for the display object, the touch screen 302 may also be used to detect whether the display object is slid to the original position, and the processor 304 may also be configured to, when the touch screen 302 detects that the display object has been slid to the original position, hide the operation area.

According to the electronic apparatus provided by the embodiments of the present disclosure, the operation area of the object to be operated can be displayed only when the operation on the object to be operated meets the condition, and the operation area can be hidden in other cases to avoid misoperation, which can effectively increase the area of the main display area of the page, enhance the page integrity and content coherence, making the user's vision more unified.

As will be appreciated by one skilled in the art, various aspects of the present disclosure may be implemented as a system, method or program product. Therefore, various aspects of the present disclosure may be embodied in the following forms: a complete hardware implementation, a complete software implementation (including firmware, microcode, etc.), or a implementation combining hardware and software aspects, which may be collectively referred to as "circuit", "module" or "system" here.

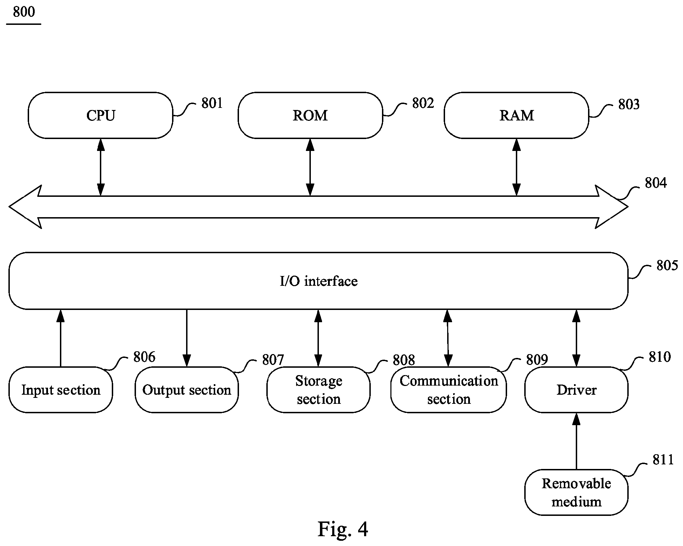

Fig. 4 is a schematic structural diagram of a computer device according to an exemplary embodiment. It should be noted that the computer device shown in Fig. 4 is only an example, and should not impose any limitations on the functions and scope of use of the embodiments of the present disclosure.

As shown in Fig. 4, the computer device 800 includes a central processing unit (CPU) 801 which can perform various appropriate actions and processes according to a program stored in a read only memory (ROM) 802 or a program loaded into a random access memory (RAM) 803 from a storage section 808. In the RAM 803, various programs and data necessary for the operation of the device 800 are also stored. The CPU 801, the ROM 802, and the RAM 803 are connected to each other through a bus 804. An input/output (I/O) interface 805 is also connected to the bus 804.

The following components are connected to the I/O interface 805: an input section 806 including a keyboard, a mouse, etc.; an output section 807 including a cathode ray tube (CRT), a liquid crystal display (LCD), etc., and a speaker, etc.; a storage section 808 including a hard disk, etc.; and a communication section 809 including a network interface card such as a LAN card, a modem, and the like. The communication section 809 performs communication processing via a network such as the Internet. A drive 810 is also connected to the I/O interface 805 as needed. A removable medium 811, such as a magnetic disk, an optical disk, a magneto-optical disk, a semiconductor memory, etc., is installed in the drive 810 as needed so that a computer program read therefrom is installed into the storage section 808 as needed.

According to the embodiments of the present disclosure, the processes described above with reference to the flowcharts may be implemented as computer software programs. For example, the embodiments of the present disclosure include a computer program product including a computer program carried on a computer-readable medium, the computer program containing program code for performing the method illustrated in the flowchart. In such an embodiment, the computer program may be downloaded and installed from the network via the communication portion 809, and/or installed from the removable medium 811. When the computer program is executed by the central processing unit (CPU) 801, the above-described functions defined in the device of the present disclosure are executed.

It should be noted that the computer-readable medium shown in the present disclosure may be a computer-readable signal medium or a computer-readable storage medium, or any combination of the above two. The computer-readable storage medium may be, for example, but not limited to, an electrical, magnetic, optical, electromagnetic, infrared, or semiconductor system, apparatus or device, or a combination of any of the above. More specific examples of computer readable storage media may include, but are not limited to, electrical connections with one or more wires, portable computer disks, hard disks, random access memory (RAM), read only memory (ROM), erasable Programmable read only memory (EPROM or flash memory), optical fiber, portable compact disk read only memory (CD-ROM), optical storage devices, magnetic storage devices, or any suitable combination of the above. In the present disclosure, the computer-readable storage medium may be any tangible medium that contains or stores a program that can be used by or in conjunction with an instruction execution system, apparatus, or device. In the present disclosure, however, the computer-readable signal medium may include a data signal propagated in baseband or as part of a carrier wave, carrying computer-readable program code therein. Such propagated data signals may take a variety of forms, including but not limited to electromagnetic signals, optical signals, or any suitable combination of the above. The computer-readable signal medium may also be any computer-readable medium other than the computer-readable storage medium that can send, propagate, or transmit the program for use by or in connection with the instruction execution system, apparatus, or device. The program code contained in the computer readable medium may be transmitted using any suitable medium including, but not limited to, wireless, wireline, optical fiber cable, RF, etc., or any suitable combination of the foregoing.

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, segment, or portion of code that contains one or more executable instructions for implementing the specified logical functions. It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It is also noted that each block in the block diagrams or flowcharts, and combinations of blocks in the block diagrams or flowcharts, may be implemented by special purpose hardware-based systems that perform the specified functions or operations, or may be implemented using a combination of dedicated hardware and computer instructions.

The unit described in the embodiments of the present disclosure can be realized by software or hardware. The described unit may also be set in the processor. For example, it may be described as: a processor including a sending unit, an obtaining unit, a determination unit and a first processing unit. The names of these units do not limit the unit itself in some cases. For example, the sending unit may also be described as "a unit that sends a picture acquisition request to the connected server".

On the other hand, the present disclosure also provides a computer-readable medium, which may be included in the device described in the above embodiment; or it may exist alone without being assembled into the device. The computer-readable medium carries one or more programs. When the one or more programs are executed by the device, the device includes:

detecting on a display object in a current page; where, in the current page, an operation area of the display object is hidden; when it is detected that the operation is a continuous sliding operation, displaying the operation area for the display object; and when it is detected that a sliding point of the continuous sliding operation reaches an area matching with any operation key in the operation area, performing an operation corresponding to a function of the operation key on the display object.

Exemplary embodiments of the present disclosure are specifically shown and described above. It should be understood that the present disclosure is not limited to the detailed structure, setting mode or implementation method described herein. The true scope of the present disclosure is indicated by the appended claims.

## Claims

1. A method for operating a page, comprising:
detecting (S102) an operation on a display object in a current page; wherein, in the current page, an operation area of the display object is hidden;
in response to detection that the operation is a continuous sliding operation performed by a finger on a screen and that a continuous sliding distance of the display object reaches a preset offset threshold, displaying (S104) the operation area for the display object, and highlighting an operation key in the operation area according to a direction of the continuous sliding operation; and
in response to detection that the finger leaves the screen, selecting the operation key and performing an operation corresponding to a function of the operation key on the display object,
wherein in response to that the selected operation key is an operation key for instructing to re-hide the operation area, the performing the operation corresponding to the function of the operation key on the display object comprises: hiding the operation area and resetting the display object to an original position.

2. The method according to claim 1, wherein the method further comprises:
detecting (S108) whether the display object is slid to an original position; and
in response to that the display object is slid to the original position, hiding (S110) the operation area.

3. An electronic apparatus (30), comprising:
a touch screen (302), configured to detect an operation on a display object in a current page of the electronic apparatus (30); wherein, in the current page, an operation area of the display object is hidden; and
a processor (304), configured to, when the touch screen (302) detects that the operation is a continuous sliding operation performed by a finger and that a continuous sliding distance of the display object reaches a preset offset threshold, display the operation area for the display object in the current page, and highlight an operation key in the operation area according to a direction of the continuous sliding operation; and when the touch screen (302) detects that the finger leaves the touch screen (302), select the operation key and perform an operation corresponding to a function of the operation key on the display object,
wherein the processor (304) is further configured to hide the operation area and reset the display object to an original position when the touch screen (302) detects that the selected operation key is an operation key for instructing to re-hide the operation area.

4. The apparatus according to claim 3, wherein the touch screen (302) is further configured to detect whether the display object is slid to an original position, and the processor (304) is further configured to hide the operation area when the touch screen (302) detects that the display object is slid to the original position.

5. A computer-readable storage medium on which computer-executable instructions are stored, wherein when the executable instructions are executed by a processor (801), the method according to any one of claims 1-2 is implemented.

## Patentansprüche

1. Verfahren zum Bedienen einer Seite, umfassend:
Erkennen (S102) einer Bedienung an einem Anzeigeobjekt auf einer aktuellen Seite, wobei auf der aktuellen Seite ein Bedienungsbereich des Anzeigeobjekts ausgeblendet ist;
als Reaktion auf eine Erkennung, dass die Bedienung eine kontinuierliche Schiebebedienung ist, die mit einem Finger auf einem Bildschirm durchgeführt wird, und dass eine kontinuierliche Schiebedistanz des Anzeigeobjekts einen voreingestellten Versatzschwellenwert erreicht, Anzeigen (S104) des Bedienungsbereichs für das Anzeigeobjekt und Hervorheben einer Bedienungstaste in dem Bedienungsbereich gemäß einer Richtung der kontinuierlichen Schiebebedienung; und
als Reaktion auf die Erkennung, dass der Finger den Bildschirm verlässt, Auswählen der Bedienungstaste und Durchführen einer Bedienung, die einer Funktion der Bedienungstaste auf dem Anzeigeobjekt entspricht,
wobei als Reaktion darauf, dass die ausgewählte Bedienungstaste eine Bedienungstaste zum Anweisen ist, den Bedienungsbereich erneut auszublenden, das Durchführen der der Funktion der Bedienungstaste entsprechenden Bedienung auf dem Anzeigeobjekt umfasst: Ausblenden des Bedienungsbereichs und Zurücksetzen des Anzeigeobjekts auf eine ursprüngliche Position.

2. Verfahren nach Anspruch 1, wobei das Verfahren ferner umfasst:
Erkennen (S108), ob das Anzeigeobjekt in eine ursprüngliche Position geschoben wurde; und
als Reaktion darauf, dass das Anzeigeobjekt in die ursprüngliche Position geschoben wurde, Ausblenden (S110) des Bedienungsbereichs.

3. Elektronisches Gerät (30), umfassend:
einen Touchscreen (302), der konfiguriert ist, um eine Bedienung an einem Anzeigeobjekt auf einer aktuellen Seite des elektronischen Geräts (30) zu erkennen; wobei auf der aktuellen Seite ein Bedienungsbereich des Anzeigeobjekts ausgeblendet ist; und
einen Prozessor (304), der konfiguriert ist, um, wenn der Touchscreen (302) erkennt, dass die Bedienung eine kontinuierliche Schiebebedienung ist, die von einem Finger durchgeführt wird, und dass eine kontinuierliche Schiebedistanz des Anzeigeobjekts einen voreingestellten Versatzschwellenwert erreicht, den Bedienungsbereich für das Anzeigeobjekt auf der aktuellen Seite anzuzeigen und eine Bedienungstaste in dem Bedienungsbereich gemäß einer Richtung der kontinuierlichen Schiebebedienung hervorzuheben; und, wenn der Touchscreen (302) erkennt, dass der Finger den Touchscreen (302) verlässt, die Bedienungstaste auszuwählen und eine Bedienung durchzuführen, die einer Funktion der Bedienungstaste auf dem Anzeigeobjekt entspricht,
wobei der Prozessor (304) ferner konfiguriert ist, den Bedienungsbereich auszublenden und das Anzeigeobjekt in eine ursprüngliche Position zurückzusetzen, wenn der Touchscreen (302) erkennt, dass die ausgewählte Bedienungstaste eine Bedienungstaste zum Anweisen ist, den Bedienungsbereich erneut auszublenden.

4. Vorrichtung nach Anspruch 3, wobei der Touchscreen (302) ferner konfiguriert ist, um zu erkennen, ob das Anzeigeobjekt in eine ursprüngliche Position geschoben wird, und der Prozessor (304) ferner konfiguriert ist, um den Bedienungsbereich auszublenden, wenn der Touchscreen (302) erkennt, dass das Anzeigeobjekt in die ursprüngliche Position geschoben wird.

5. Computerlesbares Speichermedium, auf dem computerausführbare Anweisungen gespeichert sind, wobei, wenn die ausführbaren Anweisungen durch einen Prozessor (801) ausgeführt werden, das Verfahren nach einem der Ansprüche 1 bis 2 implementiert wird.

## Revendications

1. Procédé permettant d'exploiter une page, comprenant :
la détection (S102) d'une opération sur un objet d'affichage dans une page actuelle ; dans lequel, dans la page actuelle, une zone d'exploitation de l'objet d'affichage est masquée ;
en réponse au fait de détecter que l'opération est une opération de glissement continu réalisée par un doigt sur un écran et qu'une distance de glissement continu de l'objet d'affichage atteint un seuil de décalage prédéfini, l'affichage (S104) de la zone d'exploitation pour l'objet d'affichage, et la mise en évidence d'une touche d'exploitation dans la zone d'exploitation selon une direction de l'opération de glissement continu ; et
en réponse au fait de détecter que le doigt quitte l'écran, la sélection de la touche d'exploitation et la réalisation d'une opération correspondant à une fonction de la touche d'exploitation sur l'objet d'affichage,
dans lequel, en réponse au fait que la touche d'exploitation sélectionnée est une touche d'exploitation permettant de demander de masquer à nouveau la zone d'exploitation, la réalisation de l'opération correspondant à la fonction de la touche d'exploitation sur l'objet d'affichage comprend : le masquage de la zone d'exploitation et la réinitialisation de l'objet d'affichage à une position d'origine.

2. Procédé selon la revendication 1, dans lequel le procédé comprend en outre :
le fait de détecter (S108) si l'objet d'affichage est glissé vers une position d'origine ; et
en réponse au fait que l'objet d'affichage est glissé vers sa position d'origine, le masquage (S110) de la zone d'exploitation.

3. Appareil électronique (30), comprenant :
un écran tactile (302), configuré pour détecter une opération sur un objet d'affichage dans une page actuelle de l'appareil électronique (30) ; dans lequel, dans la page actuelle, une zone d'exploitation de l'objet d'affichage est masquée ; et
un processeur (304), configuré pour, lorsque l'écran tactile (302) détecte que l'opération est une opération de glissement continu réalisée par un doigt et qu'une distance de glissement continu de l'objet d'affichage atteint un seuil de décalage prédéfini, afficher la zone d'exploitation pour l'objet d'affichage dans la page actuelle, et mettre en évidence une touche d'exploitation dans la zone d'exploitation selon une direction de l'opération de glissement continu ; et lorsque l'écran tactile (302) détecte que le doigt quitte l'écran tactile (302), sélectionner la touche d'exploitation et réaliser une opération correspondant à une fonction de la touche d'exploitation sur l'objet d'affichage,
dans lequel le processeur (304) est en outre configuré pour masquer la zone d'exploitation et réinitialiser l'objet d'affichage à une position d'origine lorsque l'écran tactile (302) détecte que la touche d'exploitation sélectionnée est une touche d'exploitation permettant de demander de masquer à nouveau la zone d'exploitation.

4. Appareil selon la revendication 3, dans lequel l'écran tactile (302) est en outre configuré pour détecter si l'objet d'affichage est glissé vers une position d'origine, et le processeur (304) est en outre configuré pour masquer la zone d'exploitation lorsque l'écran tactile (302) détecte que l'objet d'affichage est glissé vers la position d'origine.

5. Support de stockage lisible par ordinateur sur lequel sont stockées des instructions exécutables par ordinateur, dans lequel, lorsque les instructions exécutables sont exécutées par un processeur (801), le procédé selon l'une quelconque des revendications 1 à 2 est mis en œuvre.
